# EUROPÄISCHE PATENTSCHRIFT

(11) **EP 3 872 256 B1**
(45) Veröffentlichungstag und Bekanntmachung des Hinweises auf die Patenterteilung: **12.01.2022**
(21) Anmeldenummer: 20160148.1
(22) Anmeldetag: 28.02.2020
(51) Int. Cl.: D21B 1/12, B27N 1/00, B27N 3/04

(54) **VERFAHREN UND VERARBEITUNGSYSTEM ZUM REDUZIEREN VON FLÜCHTIGEN ORGANISCHEN VERBINDUNGEN AUS HACKSCHNITZELN**
METHOD AND TREATMENT SYSTEM FOR REDUCING VOLATILE ORGANIC COMPOUNDS FROM WOOD CHIPS
PROCÉDÉ ET SYSTÈME DE TRAITEMENT POUR RÉDUIRE L'ÉMISSION DE COMPOSÉS ORGANIQUES VOLATILS PAR DES COPEAUX DE BOIS

(43) Veröffentlichungstag der Anmeldung: 01.09.2021
(73) Patentinhaber: Fiberboard GmbH, 15837 Baruth (DE)
(72) Erfinder: DÜMICHEN, Christian, 15834 Rangsdorf (DE); BUNGERT, Bernd, 14169 Berlin (DE); HEINE, Thomas, 13599 Berlin (DE)
(74) Vertreter: Michalski Hüttermann & Partner Patentanwälte mbB

(56) Entgegenhaltungen:
- WO-A1-99/10594
- WO-A1-2004/072362

## Beschreibung

Die Erfindung betrifft ein Verfahren zum Reduzieren von flüchtigen organischen Verbindungen aus Hackschnitzeln zur Holzfaserherstellung in einem Verarbeitungssystem.

Die Erfindung betrifft weiterhin ein Verarbeitungssystem zum Reduzieren von flüchtigen organischen Verbindungen aus Hackschnitzeln zur Holzfaserherstellung.

Ein kontinuierlicher Herstellungsprozess von Holzfasern nach der Trocken- und Nassmethode, basierend auf lignocellulosehaltigem Material wie Holz, Stroh oder Bagasse, umfasst unter anderem eine Zerkleinerung des Rohmaterials zu freien Fasern oder Faseraggregaten, die in nachfolgenden Schritten mit Klebstoff beschichtet, getrocknet, geformt und zu einem Endprodukt, der sogenannten Platte oder Holzfaserplatte, gepresst werden. Die Freisetzung von Fasern aus dem Rohstoff erfolgt heute vorzugsweise in einem sogenannten thermo-mechanischen Verfahren in einem Schritt oder in einem thermischen und mechanischen Verfahrensschritt in zwei getrennten Phasen.

Vor der ersten thermischen Behandlung werden die Hackschnitzel üblicherweise gewaschen, um sie von Verschmutzungen wie Erde oder Steinen zu befreien. Das thermische Behandeln, also die Erwärmung des Rohmaterials, erfolgt unter anderem in einer ersten thermischen Behandlungsvorrichtung bei einer bevorzugten Temperatur von bis zu etwa 100 Grad Celsius, insbesondere unter Atmosphärendruck, und anschließend in einer vorzugsweise druckbeaufschlagten zweiten thermischen Behandlungsvorrichtung bei einer Temperatur von beispielhaft etwa 150 bis 190 Grad Celsius, insbesondere unter einem Druck von etwa 4 bis 13 bar. Die Verweilzeit der Hackschnitzel in den thermischen Behandlungsvorrichtungen kann je nach den vorherrschenden Prozessbedingungen angepasst werden und beispielhaft zwischen etwa 1 bis 10 Minuten liegen. Die thermische Erwärmung in der zweiten thermischen Behandlungsvorrichtung erfolgt nach Stand der Technik vorzugsweise mittels Dampfs. Die mechanische Verarbeitung erfolgt anschließend in einem Refiner. Die Verweilzeit des Hackschnitzel-Rohmaterials im Refiner ist von geringer Dauer. Die Energie, die im Zusammenhang mit der mechanischen Verarbeitung in mechanische Energie umgewandelt wird, wandelt sich in Wärme in der Verkleinerungszone um und tritt als Abgas, insbesondere Dampf, im Verarbeitungssystem auf, der aus der Feuchtigkeit im Rohmaterial erzeugt wird.

Üblicherweise werden die Holzfasern nach der Zerfaserung im Refiner pneumatisch zu einem Fasertrockner transportiert, wo der Trocknungsprozess mit einer großen Luftmenge und einer kontrollierten Eintrittslufttemperatur von etwa 140 bis 200 Grad Celsius, abhängig von der aktuellen Faserfeuchte, durchgeführt wird. Die getrockneten Fasern werden anschließend weiter zur Formung, zum Vorpressen und schließlich zum Fertigpressen der Platte transportiert.

Die dabei freigesetzten Holzemissionen, vor allem in der zweiten thermischen Behandlungsvorrichtung, werden nach dem Stand der Technik von der ersten thermischen Behandlungsvorrichtung über den Refiner zusammen mit dem Faserschüttgut bis zum Trockner transportiert, wo der Großteil von der Faser getrennt wird und schließlich feuchte Trocknungsluft aus dem Trockner in die Atmosphäre geleitet wird. Diese Emissionen enthalten vor allem flüchtige organische Substanzen, sogenannte flüchtige organische Verbindungen (Volatile Organic Compounds, VOC). Die verbleibenden Mengen, die den Trockner nicht verlassen, folgen dem Faserstrom zu den nachfolgenden Prozesseinheiten, wo sie sukzessive an die umgebende Atmosphäre abgegeben werden oder als Restprodukt im Endprodukt, der Platte, erscheinen. Somit findet auch vom Endprodukt aus die Ableitung der Emissionen in die Atmosphäre statt.

Aus der WO 99/10594 ist bisher bekannt, dass die zweite thermische Behandlungsvorrichtung mit einem oberen Ausgang zur Entgasung der dort freigesetzten organischen Emissionen ausgestattet ist. Hier wird der Dampf im unteren Teil der ersten thermischen Behandlungsvorrichtung eingeleitet und die Hackschnitzel, die in den oberen Teil der ersten thermischen Behandlungsvorrichtung eindringen, werden während der Kondensation im gegenströmenden Dampf gewaschen. Dies wird durch den Dampf erreicht, der sich durch die Hackschnitzelkolonne nach oben zu den kälteren Hackschnitzeln im oberen Teil der ersten thermischen Behandlungsvorrichtung bewegt. Die freigesetzten Emissionen, Abluft und Dampf, die durch die Verdampfung der Feuchtigkeit in den Hackschnitzeln entstehen, werden getrennt und durch den Auslass in einer entsprechenden Vorrichtung entsorgt. Durch diese Publikation ist auch bekannt, dass die Hackschnitzel aus der ersten thermischen Behandlungsvorrichtung mittels einer Förderschnecke, die die Hackschnitzel während des Transports komprimiert und entwässert, in den Refiner transportiert werden.

Gemäß der Offenlegungsschrift EP1597427 A1 ist ein Verfahren bekannt, wobei die bei der Verdichtung entstehenden Abgase in einer Förderschnecke über einen in der Verdichtungszone angeordneten Auslass entsorgt werden. Die Anlage nach der vorbekannten Erfindung ist dadurch gekennzeichnet, dass in der Kompressionszone ein Abgasauslass zur Ableitung von verdampfter Feuchtigkeit angeordnet ist, die beim Verdichten der Hackschnitzel entsteht und VOC-haltige Abgase enthält.

Bei der Verdichtung der Hackschnitzel in der Förderschnecke wird Wasser ausgepresst, das einen großen Teil der verbleibenden Holzemissionen enthält. Durch einen Auslass in der Kompressionszone kann das Wasser verdunsten und die freigesetzten Emissionen können über den Auslass abgegeben werden. Durch das Auffangen und Umleiten der in der Kompressionszone direkt und vor Ort freigesetzten Emissionen wird eine wesentlich höhere Konzentration der Emissionen erreicht, als wenn sie stattdessen mit dem Fasermasse weitertransportiert und mit der Trocknungsluft vermischt werden müssten, die einen sehr großen Gasstrom darstellt und damit nach anderem Stand der Technik eine geringere Konzentration aufweist. Somit wird hierdurch effizienterer Umgang mit den Abgasen aus der ersten thermischen Behandlung erreicht.

Allerdings besteht im Sinne einer umweltfreundlichen Holzverarbeitung das Bedürfnis, die VOCs noch effizienter aus den Hackschnitzeln zu extrahieren, wobei dies ebenfalls aus umweltfreundlichen Gründen energiesparend erfolgen soll.

Die Lösung der Aufgabe erfolgt erfindungsgemäß durch ein Verfahren zum Reduzieren von flüchtigen organischen Verbindungen aus Hackschnitzeln zur Holzfaserherstellung, und ein Verarbeitungssystem zum Durchführen des Verfahrens mit den Merkmalen der unabhängigen Ansprüche. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Damit betrifft die Erfindung ein Verfahren zum Reduzieren von flüchtigen organischen Verbindungen, VOC, aus Hackschnitzeln zur Holzfaserherstellung in einem Verarbeitungssystem, mindestens aufweisend folgende aufeinanderfolgende Schritte:
- Erstes thermisches Behandeln der Hackschnitzel in einer ersten thermischen Behandlungsvorrichtung, die ausgebildet ist, VOC-haltige Abgase aufzunehmen;
- Reinigen der Hackschnitzel in einer Waschvorrichtung;
- Zweites thermisches Behandeln der Hackschnitzel in einer zweiten thermischen Behandlungsvorrichtung, die ausgebildet ist, VOC-haltige Abgase aufzunehmen und auszuscheiden;
- Kochen der Hackschnitzel in einem Kocher, der ausgebildet ist, VOC-haltige Abgase aufzunehmen und auszuscheiden; und
- Zerkleinern der Hackschnitzel in einem Refiner, der ausgebildet ist, VOC-haltige Abgase auszuscheiden.

Grundidee der Erfindung ist somit, dass VOC-haltige Abgase, die insbesondere aus thermischen Behandlungsschritten der Hackschnitzel resultieren, auf unterschiedliche Weise in das Verarbeitungssystem zurückgeführt werden. Hierdurch steht Hackschnitzeln nach dem erfindungsgemäßen Verfahren in dem entsprechenden Verarbeitungssystem gegenüber vorbekannten Verfahren beziehungsweise Verarbeitungssystemen eine vermehrte Kontaktzahl und Kontaktdauer der Hackschnitzel mit VOC-freisetzenden Temperaturen zur Verfügung, wobei das Verarbeitungssystem die VOC-haltigen Abgase, die hoch temperiert sind, möglichst effizient in das Verarbeitungssystem zurück einspeist beziehungsweise wiederverwertet. Dies bedeutet, dass die Hackschnitzel umweltschonend erwärmt und von VOCs befreit werden. Obgleich die VOC-haltigen Abgase jeweils in vorhergehende Prozessstufen rückgeführt werden, nehmen die Hackschnitzel die bereits ausgeschiedenen VOCs nicht auf, sondern nutzen die vorhandene Prozesswärme, um weitere VOCs auszuscheiden. Diese werden in weiteren Prozessschritten aus dem Verarbeitungssystem entfernt.

Das erfindungsgemäße Verarbeitungssystem umfasst drei Wärmebehandlungsstufen und somit mehr als der vorbekannte Stand der Technik. Diese Wärmebehandlungsstufen erfolgen in der ersten thermischen Behandlungsvorrichtung, in der zweiten thermischen Behandlungsvorrichtung und im Kocher. Dies ermöglicht es, ohne wesentlichen Mehraufwand, eine weitere Wärmebehandlungsstufe einzuführen, sodass bevorzugt drei Wärmebehandlungsstufen vorhanden sind, die ein effizientes Ausscheiden von VOCs aus Holzschnitzeln gewährleisten.

Grundsätzlich ist im Sinne der Erfindung vorgesehen, dass VOC-haltige Abgase eine hohe Temperatur aufweisen. Dies bedeutet insbesondere eine Temperatur größer der Siedetemperatur von Wasser, also 100 Grad Celsius.

Das erste thermische Behandeln der Hackschnitzel in der ersten thermischen Behandlungsvorrichtung, die ausgebildet ist, VOC-haltige Abgase aufzunehmen, führt dazu, dass die Hackschnitzel ein erstes Mal erhitzt werden. Das Erhitzen kann über eine Heizvorrichtung erfolgen und/oder über VOC-haltige Abgase aus späteren, insbesondere thermischen, Behandlungsschritten. Dieses erste thermische Behandeln erfolgt mit weiteren holzfremden Partikeln zwischen den Hackschnitzeln, beispielsweise Erde oder Steine. Diese holzfremden Partikel werden im nächsten Schritt zwar mittels des Reinigens herausgewaschen, sodass das Aufheizen unwirtschaftlich erscheint. Allerdings hat sich herausgestellt, dass das Reinigen der Hackschnitzel in der Waschvorrichtung gründlicher erfolgt, wenn die Hackschnitzel und die weiteren holzfremden Partikel mit einer erhöhten Temperatur in die Waschvorrichtung eingeführt werden. Durch die hohe Temperatur kann eine Freisetzung von VOCs aus den Hackschnitzeln erfolgen. Es ist möglich, dass VOC-haltige Abgase aus der ersten thermischen Behandlungsvorrichtung abgeführt werden. Vorzugsweise erfolgt das erste thermische Behandeln der Hackschnitzel mit einem wasserhaltigen, insbesondere wasserbasierten Medium.

Beispielhaft und unabhängig anderer Merkmale ist es möglich, dass das erste thermische Behandeln der Hackschnitzel in der ersten thermischen Behandlungsvorrichtung mittels Dampf, vorzugsweise Wasserdampf, erfolgt. Dabei kann ein Teil der VOCs von den Hackschnitzeln auf den Dampf übergehen. Dieser VOC-haltige Dampf kann aus der ersten thermischen Behandlungsvorrichtung abgeführt werden, vorzugsweise aus deren oberem Abschnitt und beispielsweise über eine am Dach angeordnete Rohrleitung. Alternativ oder zusätzlich zum Ausscheiden des VOC-haltigen Dampfes kann ein Teil des Dampfes oder der gesamte Dampf kondensieren und als Kondensat VOCs aus den Hackschnitzel freisetzen. Dieses VOC-haltige Kondensat kann zum Beispiel in die Waschvorrichtung und/oder in eine Wasseraufbereitungsanlage weitergeleitet werden.

Das Reinigen der Hackschnitzel in einer Waschvorrichtung erfolgt insbesondere bei einer Temperatur über Raumtemperatur und kleiner gleich der Siedetemperatur von Wasser, insbesondere zwischen 80 und 100 Grad Celsius. Eine erhöhte Temperatur ermöglicht ein besseres Trennen von Hackschnitzeln und Fremdstoffen. Somit werden Fremdstoffe, die keine Hackschnitzel sind, aus dem Verarbeitungssystem herausgefiltert und abgeführt. Vorzugsweise erfolgt das Reinigen der Hackschnitzel mit einem wasserhaltigen, insbesondere wasserbasierten Medium.

Es ist eine vorteilhafte Option, dass die Waschvorrichtung das vorgenannte VOC-haltige Kondensat aus der ersten thermischen Behandlungsvorrichtung aufnimmt. Dieses VOC-haltige Kondensat kann gemeinsam mit während des Waschens freigesetztem VOC aus dem Verarbeitungssystem abgeführt werden.

Das zweite thermische Behandeln der Hackschnitzel in der zweiten thermischen Behandlungsvorrichtung, die ausgebildet ist, VOC-haltige Abgase aufzunehmen und auszuscheiden, insbesondere in die erste thermische Behandlungsvorrichtung. Das zweite thermische Behandeln erfolgt druckfrei bei einer Temperatur über Raumtemperatur, insbesondere bei einer Temperatur kleiner gleich der Siedetemperatur von Wasser, also kleiner gleich 100 Grad Celsius. Eine erhöhte Temperatur ermöglicht ein besseres Freisetzen von VOCs aus den Hackschnitzeln. Die VOC-haltigen Abgase werden aus der zweiten thermischen Behandlungsvorrichtung abgeführt und/oder in die erste thermische Behandlungsvorrichtung weitergeleitet. Weiterhin können VOC-haltige Abgase aus einer anschließend verwendeten Vorrichtung zur Durchführung des Verfahrens in die zweite thermische Behandlungsvorrichtung eingespeist werden, um die Hackschnitzel weiter aufzuheizen beziehungsweise um VOCs freizusetzen.

Beispielhaft und unabhängig anderer Merkmale ist es möglich, dass das zweite thermische Behandeln der Hackschnitzel in der zweiten thermischen Behandlungsvorrichtung mittels Dampf, vorzugsweise Wasserdampf, erfolgt. Dabei kann ein Teil der VOCs von den Hackschnitzeln auf den Dampf übergehen. Dieser VOC-haltige Dampf kann aus der zweiten thermischen Behandlungsvorrichtung abgeführt werden, vorzugsweise aus deren oberem Abschnitt und beispielsweise über eine am Dach angeordnete Rohrleitung. Alternativ oder zusätzlich zum Ausscheiden des VOC-haltigen Dampfes kann ein Teil des Dampfes oder der gesamte Dampf kondensieren und als Kondensat VOCs aus den Hackschnitzel freisetzen. Dieses VOC-haltige Kondensat kann zum Beispiel in eine Stopfschnecke und/oder einen Kocher und/oder in eine Wasseraufbereitungsanlage weitergeleitet werden.

Das Kochen der Hackschnitzel in dem Kocher, der ausgebildet ist, VOC-haltige Abgase aufzunehmen und auszuscheiden, erfolgt bei einer Temperatur über Raumtemperatur, insbesondere zwischen einschließlich zwischen einschließlich 3 bar bis einschließlich 15 bar, bevorzugt zwischen einschließlich 5 bar bis einschließlich 13 bar, vorzugsweise 9 bar, bei einer Temperatur größer der Siedetemperatur von Wasser, also 100 Grad Celsius. Eine erhöhte Temperatur ermöglicht ein besseres Freisetzen von VOCs aus den Hackschnitzeln. Vorzugsweise erfolgt das Reinigen der Hackschnitzel mit einem wasserhaltigen, insbesondere wasserbasierten Medium. Das erste und zweite thermische Behandeln hat die Hackschnitzel derart erwärmt und aufgeweicht, dass in den Hackschnitzeln enthaltene VOCs in effizienter Weise aus dem Kocher freigesetzt werden. Vorzugsweise ist dem Kocher ein Tropfenabscheider nachgeschaltet.

Es ist eine vorteilhafte Option, dass eine dem Kocher vorgeschaltete Stopfschnecke und/oder der Kocher das vorgenannte VOC-haltige Kondensat aus der zweiten thermischen Behandlungsvorrichtung aufnimmt. Dieses VOC-haltige Kondensat kann über die Stopfschnecke und/oder über den Kocher gemeinsam mit optional während des Kochens freigesetztem VOC aus dem Verarbeitungssystem abgeführt werden.

Anschließend erfolgt das Zerkleinern der Hackschnitzel in dem Refiner, der ausgebildet ist, VOC-haltige Abgase auszuscheiden. Diese VOC-haltigen Abgase können im Refiner und/oder in einem dem Refiner nachstehenden System in das Verarbeitungssystem zurückgeführt werden, sodass die Abwärme genutzt wird, und Energiekosten eingespart werden.

Gemäß einer bevorzugten Ausführungsform der Erfindung ist vorgesehen, dass die erste thermische Behandlungsvorrichtung ausgebildet ist VOC-haltige Abgase aufzunehmen, die ausgeschieden werden aus der zweiten thermischen Behandlungsvorrichtung, dem Kocher und/oder dem Refiner. Die im Verarbeitungssystem zusätzlich benötigte Energie, um die erste thermische Behandlungsvorrichtung zu erwärmen ist gegenüber einer Ausführungsform ohne diese Abgaszuleitung reduziert. Es ist auch möglich die Hackschnitzel ausschließlich über die VOC-haltigen Abgase zu erwärmen. Diese eingespeisten VOC-haltigen Abgase fördern somit bereits in der ersten thermischen Behandlungsvorrichtung das Ausscheiden von VOCs aus Hackschnitzeln. Dabei werden die Hackschnitzel derart erwärmt, dass sie in der Waschvorrichtung gegenüber nicht erwärmten Hackschnitzeln effizienter gereinigt werden.

Gemäß einer bevorzugten Ausführungsform der Erfindung ist vorgesehen, dass die zweite thermische Behandlungsvorrichtung ausgebildet ist VOC-haltige Abgase aufzunehmen, die ausgeschieden werden aus dem Kocher und/oder dem Refiner. Die im Verarbeitungssystem zusätzlich benötigte Energie, um die zweite thermische Behandlungsvorrichtung zu erwärmen ist gegenüber einer Ausführungsform ohne diese Abgaszuleitung reduziert. Es ist auch möglich die Hackschnitzel ausschließlich über die VOC-haltigen Abgase zu erwärmen. Diese eingespeisten VOC-haltigen Abgase fördern somit bereits in der ersten thermischen Behandlungsvorrichtung das Ausscheiden von VOCs aus Hackschnitzeln. Dabei werden die Hackschnitzel derart erwärmt, dass sie in der Waschvorrichtung gegenüber nicht erwärmten Hackschnitzeln effizienter gereinigt werden.

Gemäß einer bevorzugten Ausführungsform der Erfindung ist vorgesehen, dass die VOCs aus dem Verarbeitungssystem abgeführt werden aus der ersten thermischen Behandlungsvorrichtung, der zweiten thermischen Behandlungsvorrichtung, dem Kocher und/oder dem Refiner. Möglich ist, dass die VOCs aus nur einer dieser Stationen abgeführt wird. So kann dies beispielsweise in der ersten thermischen Behandlungsvorrichtung, der zweiten thermischen Behandlungsvorrichtung und/oder im Refiner in der Gasphase erfolgen. Möglich ist auch ein Abfließen von VOC-haltiger Flüssigkeit aus dem Refiner, das aus den verarbeiteten Hackschnitzeln entfließt. Im Kocher können die VOCs in der Gasphase ausgeschieden werden und/oder aus dem Kochmedium, indem dieses aus dem Kocher abfließt. Auch können die VOCs als öliges Medium auf einer Wasseroberfläche schwimmen und aus dem Kocher abgeführt werden. Das Abführen in der Gasphase geschieht durch einen Abzug im oberen Gefäßbereich. Das Abfließen erfolgt mithilfe der Schwerkraft aus dem unteren Gefäßbereich. Zumindest teilweise verlassen die VOCs das Verarbeitungssystem über das Wasser des Kochers, beziehungsweise als Ölphasen auf dem Wasser. Vorzugsweise verlassen die VOCs das Verarbeitungssystem über einen wesentlichen Teil, beispielsweise größer 50 Prozent, über das Wasser der Waschvorrichtung, beziehungsweise als Ölphasen auf dem Wasser. Der Grundgedanke ist hierbei, dass die VOCs zuerst aufkonzentriert werden und anschließend entsorgt werden, insbesondere über Wasch- und Quetschwasser.

Gemäß einer bevorzugten Ausführungsform der Erfindung ist vorgesehen, dass die VOCs aus dem Verarbeitungssystem aus der Waschvorrichtung abgeführt werden. Optional oder zusätzlich ist vorgesehen, dass das Verarbeitungssystem entlang eines Materialflusses der Hackschnitzel zwischen der zweiten thermischen Behandlungsvorrichtung und dem Kocher eine Stopfschnecke aufweist. Die Stopfschnecke ist insbesondere derart ausgebildet, dass VOCs über diese aus dem Verarbeitungssystem abgeführt werden können. Es hat sich herausgestellt, dass VOCs an diesen Bereichen mit vorteilhafter Effizienz aus der Waschvorrichtung sowie aus der Stopfschnecke aus dem Verarbeitungssystem entfernbar sind, ohne dass der Prozess wesentlich negativ beeinflusst würde, beispielsweise durch eine unvorteilhafte Temperaturentwicklung.

Gemäß einer bevorzugten Ausführungsform der Erfindung ist vorgesehen, dass
das erste thermische Behandeln der Hackschnitzel bei 80 Grad Celsius für 5 bis 10 Minuten erfolgt; und/oder
das zweite thermische Behandeln der Hackschnitzel bei 100 Grad Celsius für 5 bis 10 Minuten erfolgt; und/oder
das Kochen der Hackschnitzel zwischen 140 bis 180 Grad Celsius für 2 bis 5 Minuten erfolgt. Sowohl die Temperaturangaben als auch die Zeitangaben umfassen eine jeweilige Abweichung nach oben und unten von einschließlich 10 Prozent. Es hat sich herausgestellt, dass die Hackschnitzel in diesen Bereichen bei den jeweiligen Verfahrensschritten besonders vorteilhaft hinsichtlich VOCs reduziert werden können. Dabei kann jeder bevorzugte Bereich für sich alleine vorteilig sein und wird stetig vorteilhafter mit weiteren bevorzugten Bereichen, die frei miteinander kombinierbar sind.

Gemäß einer bevorzugten Ausführungsform der Erfindung ist vorgesehen, dass die erste thermische Behandlungsvorrichtung zumindest teilweise, vorzugsweise vollständig, über Abdämpfe des Kochers beheizt wird. Solche Abdämpfe sind auch als Fegedämpfe bekannt. Dies hat sich als energieeffizient erwiesen, wobei hinreichend Energie eingepflegt wird, um die VOC-Reduktion im Verfahren zu unterstützen.

Gemäß einer bevorzugten Ausführungsform der Erfindung ist vorgesehen, dass die VOC-haltigen Abgase des Kochers und des Refiners zusammengeführt weitergeleitet werden. Dadurch wird die Temperatur des Abgases aus dem Kocher und dem Refiner gemittelt, sodass der notwenige Anteil der Eigenheizung des die zusammengeführten Abgase aufnehmenden Behälters zuverlässig bestimmbar ist und unerwünschte Temperaturschwankungen in dem aufnehmenden Behälter reduziert werden. Der aufnehmende Behälter ist beziehungsweise sind insbesondere die erste thermische Behandlungsvorrichtung, die zweite thermische Behandlungsvorrichtung und/oder der Kocher.

Gemäß einer bevorzugten Ausführungsform der Erfindung ist vorgesehen, dass die VOC-haltigen Abgase der zweiten thermischen Behandlungsvorrichtung, des Kochers und des Refiners zusammengeführt weitergeleitet werden. Dadurch wird die Temperatur des Abgases aus der zweiten thermischen Behandlungsvorrichtung, dem Kocher und dem Refiner gemittelt, sodass der notwenige Anteil der Eigenheizung des die zusammengeführten Abgase aufnehmenden Behälters zuverlässig bestimmbar ist und unerwünschte Temperaturschwankungen in dem aufnehmenden Behälter reduziert werden. Der aufnehmende Behälter ist insbesondere die erste thermische Behandlungsvorrichtung.

Gemäß einer bevorzugten Ausführungsform der Erfindung ist vorgesehen, dass der Kocher ausgebildet ist VOC-haltige Abgase aufzunehmen, die ausgeschieden werden aus dem Kocher und/oder dem Refiner. Abgasabwärme kann somit wieder in den Kocher zurückgeführt werden. Auch kann diese Abgasabwärme mit Abgasen des Refiners erhöht werden. Das Ausscheiden von VOCs aus den Hackschnitzeln kann somit energieeffizient gefördert werden.

Gemäß einer bevorzugten Ausführungsform der Erfindung ist vorgesehen, dass die VOC-haltigen Abgase in einen Bodenabschnitt des Kochers, der ersten und/oder der zweiten thermischen Behandlungsvorrichtung eingeleitet werden. Somit werden die erhitzten Hackschnitzel entlang einer möglichst langen vertikalen Erstreckungsachse des Kochers, der ersten und/oder der zweiten thermischen Behandlungsvorrichtung mit einem Gasstrom in Verbindung gebracht, um die VOCs des Gasstroms in der Flüssigkeit aufzunehmen. Damit wird das VOC-haltige Abgas effizient genutzt. Diese Maßnahme zielt darauf ab, die Hackschnitzel möglichst effizient zu erhitzen und eine umfassende VOC-Ausscheidung zu gewährleisten.

Gemäß einer bevorzugten Ausführungsform der Erfindung ist vorgesehen, dass der Materialfluss der Hackschnitzel erfolgt
aus der ersten thermischen Behandlungsvorrichtung in die Waschvorrichtung;
aus der Waschvorrichtung in die zweite thermische Behandlungsvorrichtung;
aus der zweiten thermischen Behandlungsvorrichtung in den Kocher; und
aus dem Kocher in den Refiner. Es hat sich herausgestellt, dass durch diesen Materialfluss in Verbindung mit Maßnahmen des vorgenannten Verfahrens eine effiziente VOC-Ausscheidung erzielt wird. Dies bedeutet, dass VOCs mit geringem Energieeinsatz möglichst umfassend aus den Hackschnitzeln herausgelöst werden. Auch das Erwärmen der noch verunreinigten Hackschnitzel in der ersten thermischen Behandlungsvorrichtung vor Einleiten in die Waschvorrichtung erhöht die Effizienz, weil der mit den Hackschnitzeln erwärmte Dreck gut von den Hackschnitzeln gelöst werden kann.

Weiterhin betrifft die Erfindung ein Verarbeitungssystem zum Reduzieren von flüchtigen organischen Verbindungen, VOC, aus Hackschnitzeln zur Holzfaserherstellung zum Durchführen eines Verfahrens nach mindestens einem der vorhergehenden Ansprüche, aufweisend:
- eine erste thermische Behandlungsvorrichtung, die ausgebildet ist, VOC-haltige Abgase aufzunehmen, zum ersten thermischen Behandeln der Hackschnitzel;
- eine Waschvorrichtung zum Reinigen der Hackschnitzel;
- eine zweite thermische Behandlungsvorrichtung, die ausgebildet ist, VOC-haltige Abgase aufzunehmen und auszuscheiden, zum zweiten thermischen Behandeln der Hackschnitzel;
- einen Kocher, der ausgebildet ist, VOC-haltige Abgase aufzunehmen und auszuscheiden, zum Kochen der Hackschnitzel;
- einen Refiner, der ausgebildet ist, VOC-haltige Abgase auszuscheiden, zum Zerkleinern der Hackschnitzel. Das Verarbeitungssystem ermöglicht ein kostengünstiges und umweltschonendes Ausscheiden von VOCs aus Hackschnitzeln, wobei die vorgenannten Ausführungen, insbesondere zu Anspruch 1, gleichfalls anwendbar sind.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigt:

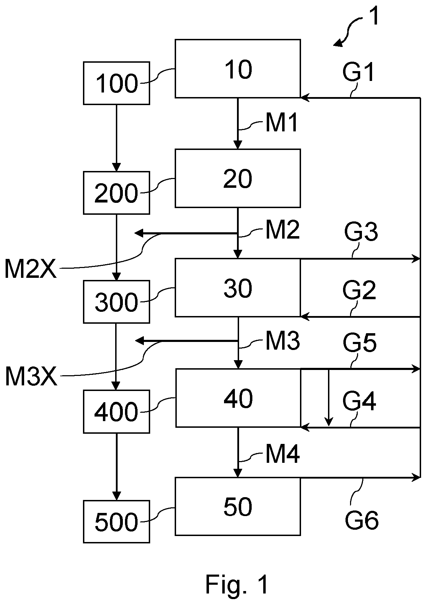

- Fig. 1:: ein Verfahren zum Reduzieren von flüchtigen organischen Verbindungen aus Hackschnitzeln zur Holzfaserherstellung in einem Verarbeitungssystem, mit Darstellung des Materialflusses und des Abgasflusses.

Figur 1 zeigt in einer Darstellung ein symbolisch dargestelltes Verarbeitungssystem 1 zum Durchführen eines Verfahrens zum Reduzieren von flüchtigen organischen Verbindungen, VOC, aus Hackschnitzeln zur Holzfaserherstellung.

Strukturell weist das Verarbeitungssystem 1 mindestens auf eine erste thermische Behandlungsvorrichtung 10, eine Waschvorrichtung 20, eine zweite thermische Behandlungsvorrichtung 30, einen Kocher 40 und einen Refiner 50.

Dabei führt das Verarbeitungssystem 1 zum Reduzieren von VOCs aus Hackschnitzeln nach Figur 1 folgende Verfahrensschritte durch:
In der ersten thermischen Behandlungsvorrichtung 10 erfolgt ein erstes thermisches Behandeln von Hackschnitzeln 100.

Anschließend erfolgt in der Waschvorrichtung 20 ein Reinigen der Hackschnitzel 200.

Nach dem Reinigen der Hackschnitzel 200 werden diese in der zweiten thermischen Behandlungsvorrichtung 30 ein zweites Mal thermisch behandelt 300.

Die in der zweiten thermischen Behandlungsvorrichtung 30 das zweite Mal thermisch behandelten Hackschnitzel 300 werden anschließend im Kocher 40 gekocht 400.

Nach dem Kochen der Hackschnitzel 400 im Kocher 40 erfolgt ein Zerkleinern der Hackschnitzel 500 im Refiner 50.

Innerhalb des Verarbeitungssystems 1 erfolgt zum energieeffizienten und umweltschonenden Reduzieren von VOCs aus Hackschnitzeln nach Figur 1 ein Gasfluss wie folgt:
Durch die erste thermische Behandlungsvorrichtung 10 erfolgt ein Aufnehmen VOC-haltiger Abgase G1.

Durch die zweite thermische Behandlungsvorrichtung 30 erfolgt ein Aufnehmen VOC-haltiger Abgase G2.

Weiterhin erfolgt durch die zweite thermische Behandlungsvorrichtung 30 ein Ausscheiden VOC-haltiger Abgase G3.

Durch den Kocher 40 erfolgt ein Aufnehmen VOC-haltiger Abgase G4. Weiterhin erfolgt durch den Kocher 40 ein Ausscheiden VOC-haltiger Abgase G5.

Der Refiner 50 ist mindestens ausgebildet zum Ausscheiden VOC-haltiger Abgase G6. Optional möglich ist ein Aufnehmen VOC-haltiger Abgase aus dem Kocher 40.

Die VOC-ausscheidenden Hackschnitzel folgen innerhalb des Verarbeitungssystems einem Materialfluss wie folgt:
von der ersten thermischen Behandlungsvorrichtung 10 in die Waschvorrichtung 20 M1,
von der Waschvorrichtung 20 in die zweite thermische Behandlungsvorrichtung 30 M2,
von der zweiten thermischen Behandlungsvorrichtung 30 in den Kocher 40 M3, und von dem Kocher 40 in den Refiner 50 M4.

Anders formuliert weist das Verarbeitungssystem 1 zum Reduzieren von flüchtigen organischen Verbindungen, VOC, aus Hackschnitzeln zur Holzfaserherstellung zum Durchführen des vorgenannten Verfahrens auf:
- eine erste thermische Behandlungsvorrichtung 10, die ausgebildet ist, VOC-haltige Abgase aufzunehmen G1, zum ersten thermischen Behandeln der Hackschnitzel 100;
- eine Waschvorrichtung 20 zum Reinigen der Hackschnitzel 200;
- eine zweite thermische Behandlungsvorrichtung 30, die ausgebildet ist, VOC-haltige Abgase aufzunehmen G2 und auszuscheiden G3, zum zweiten thermischen Behandeln der Hackschnitzel 300;
- einen Kocher 40, der ausgebildet ist, VOC-haltige Abgase aufzunehmen G4 und auszuscheiden G5, zum Kochen der Hackschnitzel 400; und
- einen Refiner 50, der ausgebildet ist, VOC-haltige Abgase auszuscheiden G6, zum Zerkleinern der Hackschnitzel 500.

Das Verfahren zum Reduzieren von flüchtigen organischen Verbindungen, VOC, aus Hackschnitzeln zur Holzfaserherstellung in einem Verarbeitungssystem 1, weist anders formuliert mindestens folgende aufeinanderfolgende Schritte auf:
- Erstes thermisches Behandeln der Hackschnitzel 100 in einer ersten thermischen Behandlungsvorrichtung 10, die ausgebildet ist, VOC-haltige Abgase aufzunehmen G1;
- Reinigen der Hackschnitzel 200 in einer Waschvorrichtung 20;
- Zweites thermisches Behandeln der Hackschnitzel 300 in einer zweiten thermischen Behandlungsvorrichtung 30, die ausgebildet ist, VOC-haltige Abgase aufzunehmen G2 und auszuscheiden G3;
- Kochen der Hackschnitzel 400 in einem Kocher 40, der ausgebildet ist, VOC-haltige Abgase aufzunehmen G4 und auszuscheiden G5; und
- Zerkleinern der Hackschnitzel 500 in einem Refiner 50, der ausgebildet ist, VOC-haltige Abgase auszuscheiden G6.

Gemäß einer bevorzugten Ausführungsform der Erfindung ist nach Figur 1 vorgesehen, dass
die erste thermische Behandlungsvorrichtung 10 ausgebildet ist VOC-haltige Abgase aufzunehmen G1, die ausgeschieden werden aus der zweiten thermischen Behandlungsvorrichtung 30 G3, dem Kocher 40 G5 und dem Refiner 50 G6.

Gemäß einer bevorzugten Ausführungsform der Erfindung ist nach Figur 1 vorgesehen, dass
die zweite thermische Behandlungsvorrichtung 30 ausgebildet ist VOC-haltige Abgase aufzunehmen G2, die ausgeschieden werden aus dem Kocher 40 G5 und dem Refiner 50 G6.

Gemäß einer bevorzugten Ausführungsform der Erfindung ist vorgesehen, dass
die VOCs ausgeschieden werden aus der ersten thermischen Behandlungsvorrichtung 10, der zweiten thermischen Behandlungsvorrichtung 30, dem Kocher 40 und/oder dem Refiner 50. Dies ist in der Figur 1 nicht näher dargestellt.

Gemäß einer bevorzugten Ausführungsform der Erfindung ist vorgesehen, dass
das Verarbeitungssystem 1 bevorzugt entlang eines Materialflusses zwischen der zweiten thermischen Behandlungsvorrichtung 30 und dem Kocher 40 eine Stopfschnecke aufweist, wobei die VOCs aus dem Verarbeitungssystem 1 abgeführt werden, insbesondere aus der Waschvorrichtung M2X und/oder insbesondere aus der Stopfschnecke M3X.

Gemäß einer bevorzugten Ausführungsform der Erfindung ist vorgesehen, dass
das erste thermische Behandeln der Hackschnitzel 100 bei 80 Grad Celsius für 5 bis 10 Minuten erfolgt; und/oder
das zweite thermische Behandeln der Hackschnitzel 300 bei 100 Grad Celsius für 5 bis 10 Minuten erfolgt; und/oder
das Kochen der Hackschnitzel 400 zwischen 140 bis 180 Grad Celsius für 2 bis 5 Minuten erfolgt. Sowohl die Temperaturangaben als auch die Zeitangaben umfassen bevorzugt eine jeweilige Abweichung nach oben und/oder unten von einschließlich 10 Prozent.

Gemäß einer bevorzugten Ausführungsform der Erfindung ist vorgesehen, dass die erste thermische Behandlungsvorrichtung 10 zumindest teilweise, vorzugsweise vollständig, über Abdämpfe des Kochers 40 beheizt wird.

Gemäß einer bevorzugten Ausführungsform der Erfindung ist nach Figur 1 vorgesehen, dass
die VOC-haltigen Abgase des Kochers 40 und des Refiners 50 zusammengeführt weitergeleitet werden.

Gemäß einer bevorzugten Ausführungsform der Erfindung ist nach Figur 1 weiterhin vorgesehen, dass
die VOC-haltigen Abgase der zweiten thermischen Behandlungsvorrichtung 30, des Kochers 40 und des Refiners 50 zusammengeführt weitergeleitet werden.

Gemäß einer bevorzugten Ausführungsform der Erfindung ist nach Figur 1 vorgesehen, dass
der Kocher 40 ausgebildet ist VOC-haltige Abgase aufzunehmen G4, die ausgeschieden werden aus dem Kocher 40 G5 und dem Refiner 50 G6.

Gemäß einer bevorzugten Ausführungsform der Erfindung ist nach Figur 1 vorgesehen, dass
die VOC-haltigen Abgase in einen Bodenabschnitt des Kochers 40, der ersten und der zweiten thermischen Behandlungsvorrichtung 10, 30 eingeleitet werden.

Gemäß einer bevorzugten Ausführungsform der Erfindung ist nach Figur 1 vorgesehen, dass
der Materialfluss der Hackschnitzel erfolgt von
der ersten thermischen Behandlungsvorrichtung 10 in die Waschvorrichtung 20 M1; der Waschvorrichtung 20 in die zweite thermische Behandlungsvorrichtung 30 M2;
der zweiten thermischen Behandlungsvorrichtung 30 in den Kocher 40 M3; und dem Kocher 40 in den Refiner 50 M4.

### Bezugszeichenliste

- 1: Verarbeitungssystem
- 10: Erste thermische Behandlungsvorrichtung
- 20: Waschvorrichtung
- 30: Zweite thermische Behandlungsvorrichtung
- 40: Kocher
- 50: Refiner
- 100: Erstes thermisches Behandeln von Hackschnitzeln
- 200: Reinigen der Hackschnitzel
- 300: Zweites thermisches Behandeln der Hackschnitzel
- 400: Kochen der Hackschnitzel
- 500: Zerkleinern der Hackschnitzel
- G1: Aufnehmen VOC-haltiger Abgase durch erste thermische Behandlungsvorrichtung
- G2: Aufnehmen VOC-haltiger Abgase durch zweite thermische Behandlungsvorrichtung
- G3: Ausscheiden VOC-haltiger Abgase durch zweite thermische Behandlungsvorrichtung
- G4: Aufnehmen VOC-haltiger Abgase durch Kocher
- G5: Ausscheiden VOC-haltiger Abgase durch Kocher
- G6: Ausscheiden VOC-haltiger Abgase durch Refiner
- M1: Materialfluss der Hackschnitzel von der ersten thermischen Behandlungsvorrichtung in die Waschvorrichtung
- M2: Materialfluss der Hackschnitzel von der Waschvorrichtung in die zweite thermische Behandlungsvorrichtung
- M2X: Abführen von VOCs aus dem Verarbeitungssystem aus der Waschvorrichtung
- M3: Materialfluss der Hackschnitzel von der zweiten thermischen Behandlungsvorrichtung in den Kocher
- M3X: Abführen von VOCs aus dem Verarbeitungssystem aus einer Stopfschnecke
- M4: Materialfluss der Hackschnitzel von dem Kocher in den Refiner
- VOC: Flüchtige organische Verbindungen

## Patentansprüche

1. Verfahren zum Reduzieren von flüchtigen organischen Verbindungen, VOC, aus Hackschnitzeln zur Holzfaserherstellung in einem Verarbeitungssystem (1), mindestens aufweisend folgende aufeinanderfolgende Schritte:
- Erstes thermisches Behandeln der Hackschnitzel (100) in einer ersten thermischen Behandlungsvorrichtung (10), die ausgebildet ist, VOC-haltige Abgase aufzunehmen (G1);
- Reinigen der Hackschnitzel (200) in einer Waschvorrichtung (20);
- Zweites thermisches Behandeln der Hackschnitzel (300) in einer zweiten thermischen Behandlungsvorrichtung (30), die ausgebildet ist, VOC-haltige Abgase aufzunehmen (G2) und auszuscheiden (G3);
- Kochen der Hackschnitzel (400) in einem Kocher (40), der ausgebildet ist, VOC-haltige Abgase aufzunehmen (G4) und auszuscheiden (G5); und
- Zerkleinern der Hackschnitzel (500) in einem Refiner (50), der ausgebildet ist, VOC-haltige Abgase auszuscheiden (G6).

2. Verfahren zum Reduzieren von flüchtigen organischen Verbindungen, VOC, aus Hackschnitzeln zur Holzfaserherstellung nach Anspruch 1, **dadurch gekennzeichnet, dass**
die erste thermische Behandlungsvorrichtung (10) ausgebildet ist VOC-haltige Abgase aufzunehmen (G1), die ausgeschieden werden aus der zweiten thermischen Behandlungsvorrichtung (30) (G3), dem Kocher (40) (G5) und/oder dem Refiner (50) (G6).

3. Verfahren zum Reduzieren von flüchtigen organischen Verbindungen, VOC, aus Hackschnitzeln zur Holzfaserherstellung nach Anspruch 1 oder 2, **dadurch gekennzeichnet, dass**
die zweite thermische Behandlungsvorrichtung (30) ausgebildet ist VOC-haltige Abgase aufzunehmen (G2), die ausgeschieden werden aus dem Kocher (40) (G5) und/oder dem Refiner (50) (G6).

4. Verfahren zum Reduzieren von flüchtigen organischen Verbindungen, VOC, aus Hackschnitzeln zur Holzfaserherstellung nach mindestens einem der vorhergehenden Ansprüche, **dadurch gekennzeichnet, dass**
die VOCs aus dem Verarbeitungssystem (1) abgeführt werden aus der ersten thermischen Behandlungsvorrichtung (10), der zweiten thermischen Behandlungsvorrichtung (30), dem Kocher (40) und/oder dem Refiner (50).

5. Verfahren zum Reduzieren von flüchtigen organischen Verbindungen, VOC, aus Hackschnitzeln zur Holzfaserherstellung nach mindestens einem der vorhergehenden Ansprüche, **dadurch gekennzeichnet, dass**
die VOCs aus dem Verarbeitungssystem (1) aus der Waschvorrichtung (20) abgeführt werden (M2X) und/oder dass das Verarbeitungssystem (1) entlang eines Materialflusses zwischen der zweiten thermischen Behandlungsvorrichtung (30) und dem Kocher (40) eine Stopfschnecke aufweist, wobei die VOCs aus dem Verarbeitungssystem (1) aus der Stopfschnecke abgeführt werden (M3X).

6. Verfahren zum Reduzieren von flüchtigen organischen Verbindungen, VOC, aus Hackschnitzeln zur Holzfaserherstellung nach mindestens einem der vorhergehenden Ansprüche, **dadurch gekennzeichnet, dass**
das erste thermische Behandeln der Hackschnitzel (100) bei 80 Grad Celsius für 5 bis 10 Minuten erfolgt; und/oder
das zweite thermische Behandeln der Hackschnitzel (300) bei 100 Grad Celsius für 5 bis 10 Minuten erfolgt; und/oder
das Kochen der Hackschnitzel (400) zwischen 140 bis 180 Grad Celsius für 2 bis 5 Minuten erfolgt.

7. Verfahren zum Reduzieren von flüchtigen organischen Verbindungen, VOC, aus Hackschnitzeln zur Holzfaserherstellung nach mindestens einem der vorhergehenden Ansprüche, **dadurch gekennzeichnet, dass**
die erste thermische Behandlungsvorrichtung (10) zumindest teilweise, vorzugsweise vollständig, über Abdämpfe des Kochers (40) beheizt wird.

8. Verfahren zum Reduzieren von flüchtigen organischen Verbindungen, VOC, aus Hackschnitzeln zur Holzfaserherstellung nach mindestens einem der vorhergehenden Ansprüche, **dadurch gekennzeichnet, dass**
die VOC-haltigen Abgase des Kochers (40) und des Refiners (50) zusammengeführt weitergeleitet werden.

9. Verfahren zum Reduzieren von flüchtigen organischen Verbindungen, VOC, aus Hackschnitzeln zur Holzfaserherstellung nach mindestens einem der vorhergehenden Ansprüche, **dadurch gekennzeichnet, dass**
die VOC-haltigen Abgase der zweiten thermischen Behandlungsvorrichtung (30), des Kochers (40) und des Refiners (50) zusammengeführt weitergeleitet werden.

10. Verfahren zum Reduzieren von flüchtigen organischen Verbindungen, VOC, aus Hackschnitzeln zur Holzfaserherstellung nach mindestens einem der vorhergehenden Ansprüche, **dadurch gekennzeichnet, dass**
der Kocher (40) ausgebildet ist VOC-haltige Abgase aufzunehmen (G4), die ausgeschieden werden aus dem Kocher (40) (G5) und/oder dem Refiner (50) (G6).

11. Verfahren zum Reduzieren von flüchtigen organischen Verbindungen, VOC, aus Hackschnitzeln zur Holzfaserherstellung nach mindestens einem der vorhergehenden Ansprüche, **dadurch gekennzeichnet, dass**
die VOC-haltigen Abgase in einen Bodenabschnitt des Kochers (40), der ersten und/oder der zweiten thermischen Behandlungsvorrichtung (10, 30) eingeleitet werden.

12. Verfahren zum Reduzieren von flüchtigen organischen Verbindungen, VOC, aus Hackschnitzeln zur Holzfaserherstellung nach mindestens einem der vorhergehenden Ansprüche, **dadurch gekennzeichnet, dass**
der Materialfluss der Hackschnitzel erfolgt
aus der ersten thermischen Behandlungsvorrichtung (10) in die Waschvorrichtung (20) (M1);
aus der Waschvorrichtung (20) in die zweite thermische Behandlungsvorrichtung (30) (M2);
aus der zweiten thermischen Behandlungsvorrichtung (30) in den Kocher (40) (M3); und
aus dem Kocher (40) in den Refiner (50) (M4).

13. Verarbeitungssystem (1) zum Reduzieren von flüchtigen organischen Verbindungen, VOC, aus Hackschnitzeln zur Holzfaserherstellung zum Durchführen eines Verfahrens nach mindestens einem der vorhergehenden Ansprüche, aufweisend:
- eine erste thermische Behandlungsvorrichtung (10), die ausgebildet ist, VOC-haltige Abgase aufzunehmen (G1), zum ersten thermischen Behandeln der Hackschnitzel (100);
- eine Waschvorrichtung (20) zum Reinigen der Hackschnitzel (200);
- eine zweite thermische Behandlungsvorrichtung (30), die ausgebildet ist, VOC-haltige Abgase aufzunehmen (G2) und auszuscheiden (G3), zum zweiten thermischen Behandeln der Hackschnitzel (300);
- einen Kocher (40), der ausgebildet ist, VOC-haltige Abgase aufzunehmen (G4) und auszuscheiden (G5), zum Kochen der Hackschnitzel (400); und
- einen Refiner (50), der ausgebildet ist, VOC-haltige Abgase auszuscheiden (G6), zum Zerkleinern der Hackschnitzel (500).

## Claims

1. Method for reducing volatile organic compounds, VOCs, from wood chips for wood fiber production in a processing system (1), at least comprising the following successive steps:
- first thermal treatment of the wood chips (100) in a first thermal treatment device (10) which is configured to receive (G1) VOC-containing exhaust gases;
- cleaning the wood chips (200) in a washing device (20);
- second thermal treatment of the wood chips (300) in a second thermal treatment device (30) which is configured to receive (G2) and discharge (G3) VOC-containing exhaust gases;
- cooking the wood chips (400) in a digester (40) which is configured to receive (G4) and discharge (G5) VOC-containing exhaust gases; and
- crushing the wood chips (500) in a refiner (50) which is configured to discharge (G6) VOC-containing exhaust gases.

2. Method for reducing volatile organic compounds, VOCs, from wood chips for wood fiber production according to claim 1, **characterized in that** the first thermal treatment device (10) is configured to receive (G1) VOC-containing exhaust gases which are discharged (G6) from the second thermal treatment device (30) (G3), the digester (40) (G5) and/or the refiner (50) (G6).

3. Method for reducing volatile organic compounds, VOCs, from wood chips for wood fiber production according to claim 1 or 2, **characterized in that** the second thermal treatment device (30) is configured to receive (G2) VOC-containing exhaust gases which are discharged from the digester (40) (G5) and/or the refiner (50) (G6).

4. Method for reducing volatile organic compounds, VOCs, from wood chips for wood fiber production according to at least one of the preceding claims, **characterized in that** the VOCs are discharged from the processing system (1) from the first thermal treatment device (10), the second thermal treatment device (30), the digester (40), and/or the refiner (50).

5. Method for reducing volatile organic compounds, VOCs, from wood chips for wood fiber production according to at least one of the preceding claims, **characterized in that** the VOCs are discharged (M2X) from the processing system (1) from the washing device (20) and/or **in that** the processing system (1) comprises a stuffing screw along a material flow between the second thermal treatment device (30) and the digester (40), wherein the VOCs are discharged (M3X) from the processing system (1) from the stuffing screw.

6. Method for reducing volatile organic compounds, VOCs, from wood chips for wood fiber production according to at least one of the preceding claims, **characterized in that** the first thermal treatment of the wood chips (100) is carried out at 80 degrees Celsius for 5 to 10 minutes; and/or
the second thermal treatment of the wood chips (300) is carried out at 100 degrees Celsius for 5 to 10 minutes; and/or
the cooking of the wood chips (400) is carried out between 140 and 180 degrees Celsius for 2 to 5 minutes.

7. Method for reducing volatile organic compounds, VOCs, from wood chips for wood fiber production according to at least one of the preceding claims, **characterized in that** the first thermal treatment device (10) is heated at least partially, preferably completely, by exhaust vapors from the digester (40).

8. Method for reducing volatile organic compounds, VOCs, from wood chips for wood fiber production according to at least one of the preceding claims, **characterized in that** the VOC-containing exhaust gases of the digester (40) and the refiner (50) are transferred in a combined manner.

9. Method for reducing volatile organic compounds, VOCs, from wood chips for wood fiber production according to at least one of the preceding claims, **characterized in that** the VOC-containing exhaust gases from the second thermal treatment device (30), the digester (40) and the refiner (50) are transferred in a combined manner.

10. Method for reducing volatile organic compounds, VOCs, from wood chips for wood fiber production according to at least one of the preceding claims, **characterized in that** the digester (40) is configured to receive VOC-containing exhaust gases (G4) which are discharged from the digester (40) (G5) and/or the refiner (50) (G6).

11. Method for reducing volatile organic compounds, VOCs, from wood chips for wood fiber production according to at least one of the preceding claims, **characterized in that** the VOC-containing exhaust gases are introduced into a bottom section of the digester (40), the first and/or the second thermal treatment device (10, 30).

12. Method for reducing volatile organic compounds, VOCs, from wood chips for wood fiber production according to at least one of the preceding claims, **characterized in that** the material flow of the wood chips takes place from the first thermal treatment device (10) into the washing device (20) (M1);
from the washing device (20) into the second thermal treatment device (30) (M2);
from the second thermal treatment device (30) into the digester (40) (M3); and
from the digester (40) into the refiner (50) (M4).

13. Processing system (1) for reducing volatile organic compounds, VOCs, from wood chips for wood fiber production for carrying out a method according to at least one of the preceding claims, comprising:
- a first thermal treatment device (10) configured to receive (G1) VOC-containing exhaust gases for a first thermal treatment of the wood chips (100);
- a washing device (20) for cleaning the wood chips (200);
- a second thermal treatment device (30) configured to receive (G2) and discharge (G3) VOC-containing exhaust gases for a second thermal treatment of the wood chips (300);
- a digester (40) configured to receive (G4) and discharge (G5) VOC-containing exhaust gases for cooking the wood chips (400); and
- a refiner (50) configured to discharge (G6) VOC-containing exhaust gases for crushing the wood chips (500).

## Revendications

1. Procédé de réduction de composés organiques volatils, COV, provenant de copeaux de bois pour la fabrication de fibres de bois dans un système de traitement (1), présentant au moins les étapes successives suivantes :
- un premier traitement thermique des copeaux de bois (100) dans un premier dispositif de traitement thermique (10) qui est conçu pour absorber (G1) les gaz d'échappement contenant les COV ;
- le nettoyage des copeaux de bois (200) dans un dispositif de lavage (20) ;
- un deuxième traitement thermique des copeaux de bois (300) dans un deuxième dispositif de traitement thermique (30) qui est conçu pour absorber (G2) et séparer (G3) les gaz d'échappement contenant les COV ;
- la cuisson des copeaux de bois (400) dans un digesteur (40) qui est conçu pour absorber (G4) et séparer (G5) les gaz d'échappement contenant les COV ; et
- la réduction des copeaux de bois (500) dans un raffineur (50) qui est conçu pour séparer (G6) les gaz d'échappement contenant les COV.

2. Procédé de réduction de composés organiques volatils, COV, provenant de copeaux de bois pour la fabrication de fibres de bois selon la revendication 1, **caractérisé en ce que** le premier dispositif de traitement thermique (10) est conçu pour absorber (G1) les gaz d'échappement contenant les COV qui sont séparés (G3), (G5), et/ou (G6), en provenance du deuxième dispositif de traitement thermique (30), du digesteur (40) et/ou du raffineur (50).

3. Procédé de réduction de composés organiques volatils, COV, provenant de copeaux de bois pour la fabrication de fibres de bois selon la revendication 1 ou la revendication 2, **caractérisé en ce que**
le deuxième dispositif de traitement thermique (30) est conçu pour absorber (G2) les gaz d'échappement contenant les COV qui sont séparés (G5) et/ou (G6), en provenance du digesteur (40) et/ou du raffineur (50).

4. Procédé de réduction de composés organiques volatils, COV, provenant de copeaux de bois pour la fabrication de fibres de bois selon au moins une des revendications précédentes, **caractérisé en ce que**
les COV sont évacués du système de traitement (1) à partir du premier dispositif de traitement thermique (10), du deuxième dispositif de traitement thermique (30), du digesteur (40 et/ou du raffineur (50).

5. Procédé de réduction de composés organiques volatils, COV, provenant de copeaux de bois pour la fabrication de fibres de bois selon au moins une des revendications précédentes, **caractérisé en ce que**
les COV provenant du système de traitement (1) sont évacués (M2X) à partir du dispositif de lavage (20) et/ou que le système de traitement (1) présente une vis de bourrage le long d'un flux de matière entre le deuxième dispositif de traitement thermique (30) et le digesteur (40), où les COV sont évacués (M3X) hors du système de traitement (1) par la vis de bourrage.

6. Procédé de réduction de composés organiques volatils, COV, provenant de copeaux de bois pour la fabrication de fibres de bois selon au moins une des revendications précédentes, **caractérisé en ce que**
le premier traitement thermique des copeaux de bois (100) a lieu à 80 degrés Celsius pour 5 à 10 minutes ; et/ou
le deuxième traitement thermique des copeaux de bois (300) a lieu à 100 degrés Celsius pour 5 à 10 minutes ; et/ou
la cuisson des copeaux de bois (400) a lieu entre 140 et 180 degrés Celsius pour de 2 à 5 minutes.

7. Procédé de réduction de composés organiques volatils, COV, provenant de copeaux de bois pour la fabrication de fibres de bois selon au moins une des revendications précédentes, **caractérisé en ce que**
le premier dispositif de traitement thermique (10) est chauffé au moins partiellement, de préférence, totalement, par le biais des vapeurs d'échappement du digesteur (40).

8. Procédé de réduction de composés organiques volatils, COV, provenant de copeaux de bois pour la fabrication de fibres de bois selon au moins une des revendications précédentes, **caractérisé en ce que**
les gaz d'échappement contenant les COV du digesteur (40) et du raffineur (50) sont emmenés ensemble plus loin.

9. Procédé de réduction de composés organiques volatils, COV, provenant de copeaux de bois pour la fabrication de fibres de bois selon au moins une des revendications précédentes, **caractérisé en ce que**
les gaz d'échappement du deuxième dispositif de traitement thermique (30), du digesteur (40) et du raffineur (50) sont emmenés ensemble plus loin.

10. Procédé de réduction de composés organiques volatils, COV, provenant de copeaux de bois pour la fabrication de fibres de bois selon au moins une des revendications précédentes, **caractérisé en ce que**
le digesteur (40) est conçu pour absorber (G4) les gaz d'échappement contenant des COV qui sont séparés (G5) et/ou (G6), du digesteur (40) et/ou du raffineur (50).

11. Procédé de réduction de composés organiques volatils, COV, provenant de copeaux de bois pour la fabrication de fibres de bois selon au moins une des revendications précédentes, **caractérisé en ce que**
les gaz d'échappement contenant des COV sont alimentés dans une partie de base du digesteur (40) des premier et/ou deuxième dispositifs de traitement thermique (10, 30).

12. Procédé de réduction de composés organiques volatils, COV, provenant de copeaux de bois pour la fabrication de fibres de bois selon au moins une des revendications précédentes, **caractérisé en ce que**
le flux de matière des copeaux de bois se produit
à partir du premier dispositif de traitement thermique (10) vers le dispositif de lavage (20), (M1) ;
à partir du dispositif de lavage (20) vers le deuxième dispositif de traitement thermique (30), (M2) ;
à partir du deuxième dispositif de traitement thermique (30) vers le digesteur (40) (M3) ;
et
à partir du digesteur (40) vers le raffineur (50), (M4).

13. Système de traitement (1) de réduction de composés organiques volatils, COV, provenant de copeaux de bois pour la fabrication de fibres de bois permettant l'exécution d'un procédé selon au moins l'une des revendications précédentes, présentant :
- un premier dispositif de traitement thermique (10) qui est conçu pour absorber (G1) les gaz d'échappement contenant les COV, permettant le traitement thermique des copeaux de bois (100) ;
- un dispositif de lavage (20) permettant le nettoyage des copeaux de bois (200) ;
- un deuxième dispositif de traitement thermique (30) qui est conçu pour absorber (G2) et séparer (G3) les gaz d'échappement contenant les COV, permettant le deuxième traitement thermique des copeaux de bois (300) ;
- un digesteur (40) qui est conçu pour absorber (G4) et séparer (G5) les gaz d'échappement contenant les COV, permettant la cuisson des copeaux de bois (400) ; et
- un raffineur (50) qui est conçu pour séparer (G6) les gaz d'échappement contenant les COV, permettant la réduction des copeaux de bois (500).
